Europäisches Patentamt

European Patent Office

Office européen des brevets

(19)

(11) **EP 0 952 441 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.7: **G01N 21/64**

(21) Anmeldenummer: **99107749.6**

(22) Anmeldetag: **19.04.1999**

(54) **Verfahren zum Ableiten sonnenangeregten Fluoreszenzlichts aus Strahldichtemessungen**

Method for measuring sunlight induced fluorescence

Procédé pour déterminer la fluorescence induite par le soleil

(84) Benannte Vertragsstaaten:
**FR GB**

(30) Priorität: **22.04.1998 DE 19817843**

(43) Veröffentlichungstag der Anmeldung:
**27.10.1999 Patentblatt 1999/43**

(73) Patentinhaber: **Deutsches Zentrum für Luft- und Raumfahrt e.V.**
**53175 Bonn (DE)**

(72) Erfinder: **Maier, Stefan**
**82205 Gilching (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
**US-A- 3 598 994**      **US-A- 4 671 662**
**US-A- 4 708 475**      **US-A- 5 062 713**
**US-A- 5 298 741**      **US-A- 5 567 947**

- **"PLANT STRESS DETECTION BY REMOTE MEASUREMENT OF FLUORESCENCE"**
**APPLIED OPTICS, Bd. 19, Nr. 19, 1. Oktober 1980 (1980-10-01), Seiten 3287-3289, XP000611046 ISSN: 0003-6935**

## Beschreibung

Die Erfindung betrifft ein Verfahren zur Ableitung von durch Sonnenlicht angeregtem Fluoreszenzlicht eines Meßobjekts aus einer mittels eines Sensors vorgenommenen Strahldichtemessung innerhalb einer atmosphärischen Absorptionsbande und einer weiteren mittels des Sensors vorgenommenen Strahldichtemessung, die außerhalb der atmosphärischen Absorptionsbande vorgenommen wird.

Zur Ermittlung des Zustandes der Vegetation werden in der Fernerkundung häufig Reflexionsmessungen eingesetzt. Dabei wird das von der Vegetation reflektierte Licht in mehr oder weniger schmalen Kanälen detektiert. Zur Verifikation und um den Einfluß der Atmosphäre auszuschließen, werden auch Messungen mit Spektrometern wenige Meter über dem Boden durchgeführt.

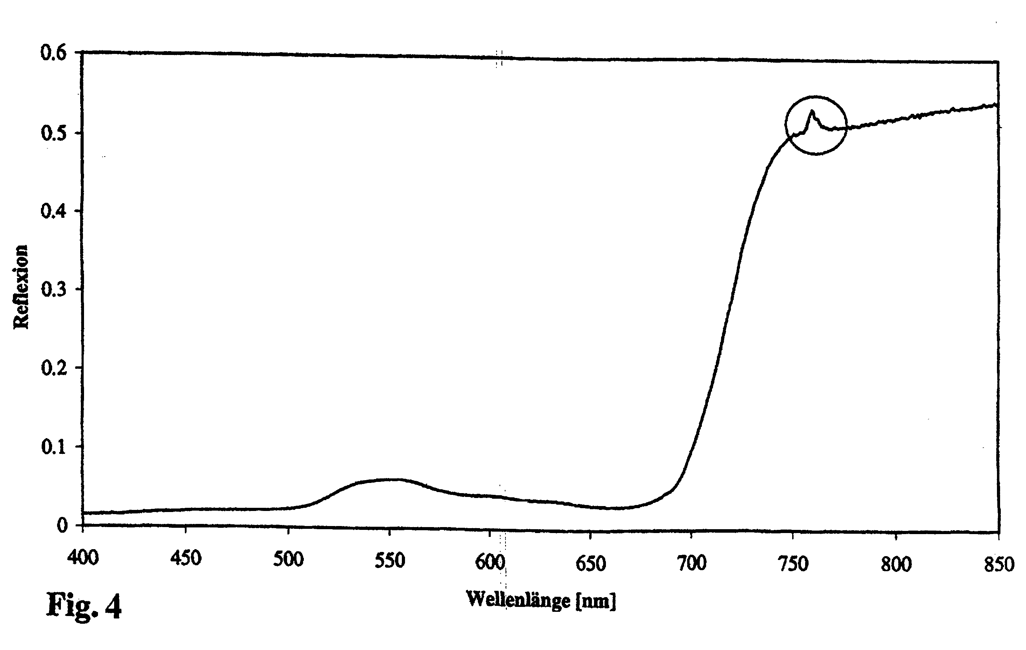

Im Rahmen einer Meßkampagne wurden beispielsweise Messungen dieser Art an Weizenkulturen durchgeführt. Ein typisches Reflexionsspektrum zeigt Fig.4. Auffällig ist ein - durch einen Kreis gekennzeichneter - Peak bei 762nm im sogenannten Infrarotplateau. Dieser Peak tritt bei Labormessungen mit künstlicher Beleuchtung nie auf.

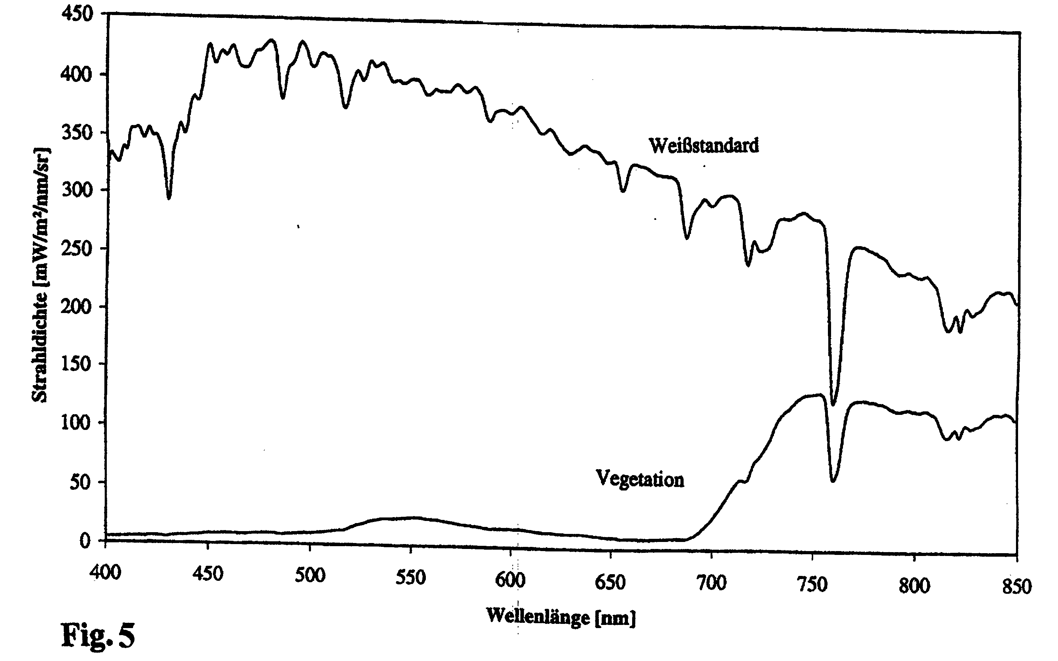

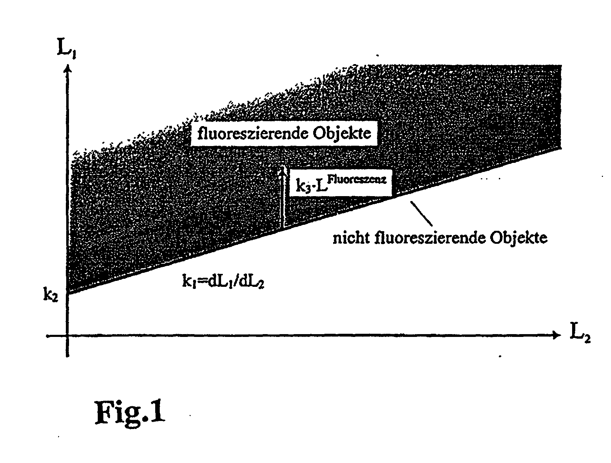

Um seine Ursache zu klären, muß die Vorgehensweise bei der Ermittlung eines Reflexionsspektrums betrachtet werden: Zunächst wird das von einem Weißstandard (d.h. einer Fläche mit bekanntem Reflexionsgrad von beinahe 100%) reflektierte Licht gemessen. Dann wird das vom Untersuchungsobjekt zurückgestrahlte Licht erfaßt. In Fig.5 sind diese beiden Messungen dargestellt, aus denen das Reflexionsspektrum in Fig.4 durch Verhältnisbildung und Multiplikation mit dem Reflexionsspektrum des Weißstandards berechnet wurde.

In Fig.5 ist deutlich die $O_2A$-Absorptionsbande der Atmosphäre bei 762nm zu erkennen. Da die Messungen hier aufgrund der niedrigeren Signale einen größeren relativen Fehler aufweisen, wurden als Ursache für den Peak Meßfehler verantwortlich gemacht. Der Peak sollte dann jedoch statistisch verteilt einmal nach oben und einmal nach unten gerichtet sein.

Bei weiteren Messungen zeigte sich jedoch, daß der Peak immer nach oben gerichtet war. Es mußte also ein systematischer Fehler vorliegen. Da er jedoch nur bei grüner Vegetation auftrat, konnte die Ursache nur Chlorophyll-Fluoreszenz sein.

In der Biologie wird die Chlorophyll-Fluoreszenz zur Charakterisierung des Zustandes eines Photosyntheseapparates eingesetzt. Daher wurde eine Methode entwickelt, die Fluoreszenz aus dem Reflexionssignal abzuleiten. Diese Methode wird im folgenden beschrieben.

Um das von bestimmten Stoffen, insbesondere grünen Pflanzenteilen, unter Tageslichtbedingungen emittierte Fluoreszenzlicht zu messen, werden bisher im allgemeinen aktive Meßmethoden eingesetzt. Hierbei wird der zu untersuchende Stoff zusätzlich zur Beleuchtung durch die Sonne mit einer gepulsten oder modulierten Lichtquelle bestrahlt. Das durch dieses Licht zusätzlich erzeugte Fluoreszenzlicht wird mit Hilfe der Lock-In-Meßtechnik detektiert. Für kurze Entfernungen und Punktmessungen werden als Lichtquellen LEDs eingesetzt (Zeitschrift "Rev. Sci. Instrum." Jahrgang 1975, Band 46, Heft 5, S. 538 bis 542).

Für größere Distanzen und bildhafte Erfassung ist man auf den Einsatz von LASER angewiesen (Zeitschrift "Remote Sensing of Environment" Jahrgang 1994, Heft 47, Seiten 10 bis 17). Bei diesen aktiven Methoden wird jedoch nicht das durch die Sonnenbestrahlung hervorgerufene, sondern nur das zusätzlich erzeugte Fluoreszenzlicht gemessen. Es können also nur Aussagen über die Fluoreszenzquantenausbeute gemacht werden.

In US-A-3 598 994 und US-A-4 708 475 und im Prinzip auch in dem Aufsatz von J. C. McFarlane et al: "Plant stress detection by remote measurement of fluorescence" in "Applied Optics", Bd. 19, Nr. 19, 1. Oktober 1980, (1989-10-01), Seiten 3287 bis 3289, ISSN: 0003-6935 werden sogenannte Fraunhofer-Line-Diskriminatoren (FLD) beschrieben, die zur Erfassung der vom Sonnenlicht bei Meßobjekten angeregten Fluoreszenz heute eingesetzt werden. Dabei wird das eingestrahlte Sonnenlicht und das vom Meßobjekt zurückgestrahlte Licht innerhalb der Fraunhoferlinien und in deren näheren Umgebung erfaßt.

Eine Erfassung der vom Sonnenlicht angeregten Fluoreszenz im Bereich der atmosphärischen Fraunhoferlinien, d.h. der atmosphärischen Absorptionsbanden, ist mit Hilfe der Fraunhofer-Line-Diskriminatormethode über größere Entfernungen nicht möglich, da das eingestrahlte Licht im Bereich des Sensordetektors erfaßt wird. Dieses unterscheidet sich im Bereich der atmosphärischen Fraunhoferlinien jedoch beträchtlich und unvorhersehbar von demjenigen auf der Meßobjektebene, da die zwischen dem Sensordetektor und dem Meßobjekt befindliche Atmosphäre starken Schwankungen bezüglich ihrer optischen Eigenschaften unterworfen ist.

Der Erfindung liegt die Aufgabe zugrunde, ohne Zuhilfenahme einer zusätzlichen Lichtquelle ein Verfahren zum Ableiten sonnenlichtangeregten Fluoreszenzlichts aus Strahldichtemessungen weiter zu entwickeln, so daß der Einfluß der Atmosphäre zwischen Objekt und Sensor korrigiert werden kann.

Gemäß der Erfindung wird dies bei einem Verfahren nach dem Oberbegriff des Anspruchs 1 durch die Merkmale in dessen kennzeichnendem Teil erreicht. Vorteilhafte Weiterbildungen sind Gegenstände der Ansprüche 2 und 3.

Das erfindungsgemäße Verfahren baut auf dem "Auffüllen" breitbandiger atmosphärischer Absorptionsbanden im Reflexionssignal durch Fluoreszenzlicht auf. Hierbei wird davon ausgegangen, daß sich die Strahldichte $L_\lambda$ am Detektor, wie folgt, zusammensetzt:

$$L_\lambda = \left( R \cdot L_\lambda^0 + L^{Fluoreszenz} \right) \cdot T_\lambda + L_\lambda^{Luft} \ . \qquad (1)$$

Hierbei ist mit $R$ der unbekannte Reflexionsgrad des zu untersuchenden Stoffes bezeichnet, der im untersuchten Spektralbereich als spektral unabhängig angenommen wird. Ferner sind mit $L^0$ die Strahldichte des Sonnenlichts am Objekt, mit $L^{Fluoreszenz}$ die Fluoreszenzstrahldichte, die auch als spektral unabhängig angenommen wird, mit $T_\lambda$ der Transmissionsgrad der Atmosphäre zwischen Objekt und Sensor und mit $L^{Luft}$ die Strahldichte des sogenannten "Luftlichts", d.h. des direkt von der Atmosphäre zwischen Objekt und Sensor zum Sensor gestreuten Lichts bezeichnet.

Gemessen werden die Strahldichten vorteilhaft bei zwei dicht beieinander liegenden Wellenlängen, nämlich eine Strahldichte innerhalb einer atmosphärischen Absorptionsbande und eine weitere außerhalb der atmosphärischen Absorptionsbande, so daß die spektrale Unabhängigkeit des Reflexionsgrades $R$ und der Fluoreszenzstrahldichte $L^{Fluoreszenz}$ gewährleistet ist.

Zur Detektion der Chlorophyll-Fluoreszenz bei 762nm ist beispielsweise ein Abstand der beiden Meßwellenlängen von bis zu 10nm möglich. Die Kenntnis der exakten Lage der Wellenlängen ist unkritisch. Die einzige Bedingung, die erfüllt sein muß, um das entstehende Gleichungssystem zu lösen, sind unterschiedliche Strahldichten des eingestrahlten Sonnenlichts bei den verwendeten Meßwellenlängen. Diese Bedingung ist im Bereich der atmosphärischen Absorptionsbanden von Wasserdampf und molekularem Sauerstoff zwischen 660nm und 1000nm erfüllt.

Im Bereich der $O_2$A-Absorptionsbande um 762nm ist eine spektrale Auflösung von 10nm ausreichend. Dies ermöglicht den Einsatz weniger empfindlicher Detektoren bzw. Messungen über größere Distanzen. Es wird eine korrigierte Fluoreszenzmessung im für eine Detektion der Chlorophyll-Fluoreszenz wichtigen Spektralbereich von 650nm bis 800nm ermöglicht.

Gemäß einer vorteilhaften Weiterbildung der Erfindung werden, um sonnenangeregtes Fluoreszenzlicht aus mit Hilfe flugzeugoder satellitengetragener abbildender Spektrometer gewonnenen Bilddaten abzuleiten, zum Bestimmen der Strahldichteverhältnisse am Boden sowie des Einflusses der Atmosphäre Bildpunkte nicht fluoreszierender Objekte verwendet.

Nachfolgend wird die Erfindung anhand der Zeichnungen im einzelnen erläutert. Es zeigen:

Fig.1 einen Graphen in Form einer Geraden, auf welcher Strahldichten von nicht-fluoreszierenden Objekten aufgetragen sind, während in der Halbebene oberhalb der Geraden Strahldichten fluoreszierender Objekte aufgetragen sind;

Fig.2 den zeitlichen Verlauf von mit Hilfe eines Spektrometers gemessenen reflektierten Strahldichten in bzw. vor der $O_2$A-Absorptionsbande;

Fig.3 einen aus Fig.2 nach Gl.(2) abgeleiteten sowie einen mit einem PAM-Fluorometer gemessenen, zeitlichen Verlauf einer Fluoreszenz, wobei auf der Abszisse die Zeit in Sekunden (s) und auf der Ordinate die Fluoreszenzstrahldichte in mW/(m2 nm sr) aufgetragen sind;

Fig.4 einen Graphen eines typischen Reflexionsspektrums, wobei auf der Abszisse die Wellenlänge in nm und auf der Ordinate die Reflexion aufgetragen sind, und

Fig.5 Graphen, durch welche ein berechnetes Reflexionsspektrum nach Fig.4 durch Verhältnisbildung und Multiplikation und ein Reflexionsspektrum eines Weißstandards wiedergegeben sind.

Je nach Aerosolgehalt kann der Einfluß der Atmosphäre zwischen Meßobjekt und Sensor bei Meßabständen von bis zu einigen hundert Metern vernachlässigt werden. Das bedeutet: Transmissionsgrad $T_\lambda$=1 und Luftlicht $L_\lambda^{Luft}$=0. Als Auswertegleichung ergibt sich dann:

$$L^{Fluoreszenz} = \frac{L_1 - \dfrac{L_1^0}{L_2^0} \cdot L_2}{1 - \dfrac{L_1^0}{L_2^0}} \ . \qquad (2)$$

Wie die Auswertegleichung (2) zeigt, ist für zwei Detektoren, die Fluoreszenzstrahldichten $L_1^0$ und $L_2^0$ erfassen, eine relative Kalibration ausreichend. Soll der Absolutwert der Fluoreszenzstrahldichte ermittelt werden, so sind die

zwei Fluoreszenzstrahldichten $L_1$ und $L_2$ erfassenden Detektoren absolut zu kalibrieren. Ansonsten genügt auch hier eine Relativkalibration der Detektoren untereinander.

In der Fernerkundung kann der Einfluß der Atmosphäre zwischen Objekt und Sensor nicht vernachlässigt werden. Weiterhin ist es in den meisten Fällen nicht möglich, auf das Objekt eingestrahltes Sonnenlicht direkt zu messen. Daher muß auf nachfolgend beschriebenes Verfahren zurückgegriffen werden. Aus Gl. (1) ergibt sich folgende Auswertegleichung:

$$k_3 \cdot L^{Fluoreszenz} = L_1 - k_1 \cdot L_2 - k_2$$

$$k_1 \equiv \frac{L_1^0 \cdot T_1}{L_2^0 \cdot T_2} \tag{3}$$

$$k_2 \equiv L_1^{Luft} - k_1 \cdot L_2^{Luft}$$

$$k_3 \equiv T_1 - k_1 \cdot T_2$$

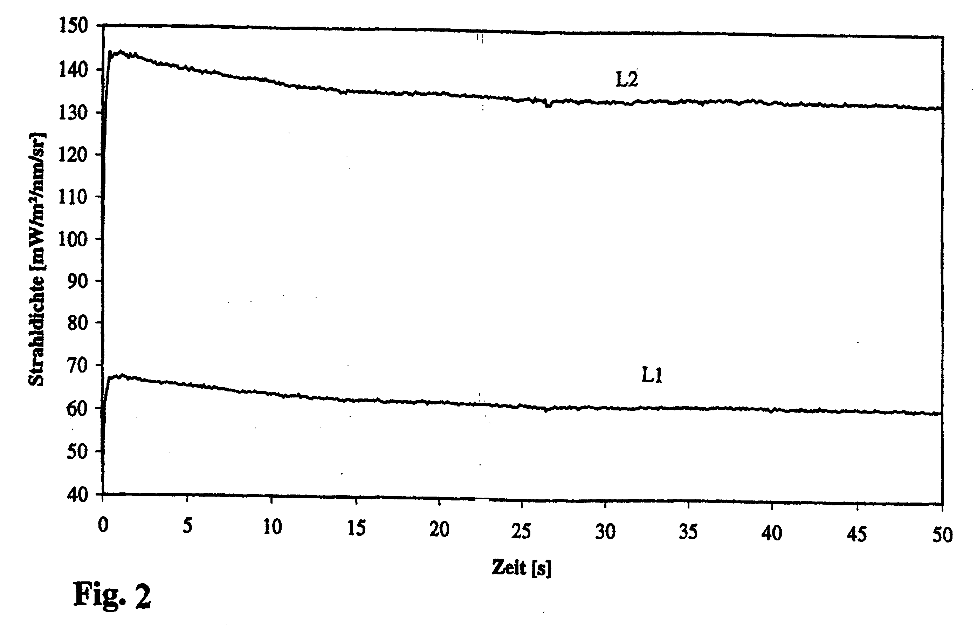

In Fig.1 sind auf der Ordinate eine Strahldichte $L_1$ und auf der Abszisse eine Strahldichte $L_2$ aufgetragen. Die Strahldichten nicht fluoreszierender Objekte liegen auf einer Geraden. Die fluoreszierender Objekte liegen in der oberen Halbebene. Dabei ist der Abstand in der Ordinaten- bzw. $L_1$-Richtung gleich $k_3 \cdot L^{Fluoreszenz}$. Wird also die Strahldichte $L_1$ über der Strahldichte $L_2$ von nicht fluoreszierenden Objekten aufgetragen, so entspricht $k_1$ der Steigung und $k_2$ dem Achsenabschnitt der Ausgleichsgeraden. Die Fluoreszenzstrahldichte fluoreszierender Objekte läßt sich dann aus obiger Gleichung berechnen.

Jedoch läßt sich $k_3$ nicht allein aus den Messungen der Strahldichten $L_1$ und $L_2$ ableiten. Die Fluoreszenzstrahldichte ist somit nur in relativen Einheiten ableitbar. Für eine Absolutangabe müssen Bodenmessungen vorliegen, bzw. es muß der Transmissionsgrad der Atmosphäre $T_1$ und $T_2$ durch andere Messungen bzw. Simulationsrechnungen bekannt sein.

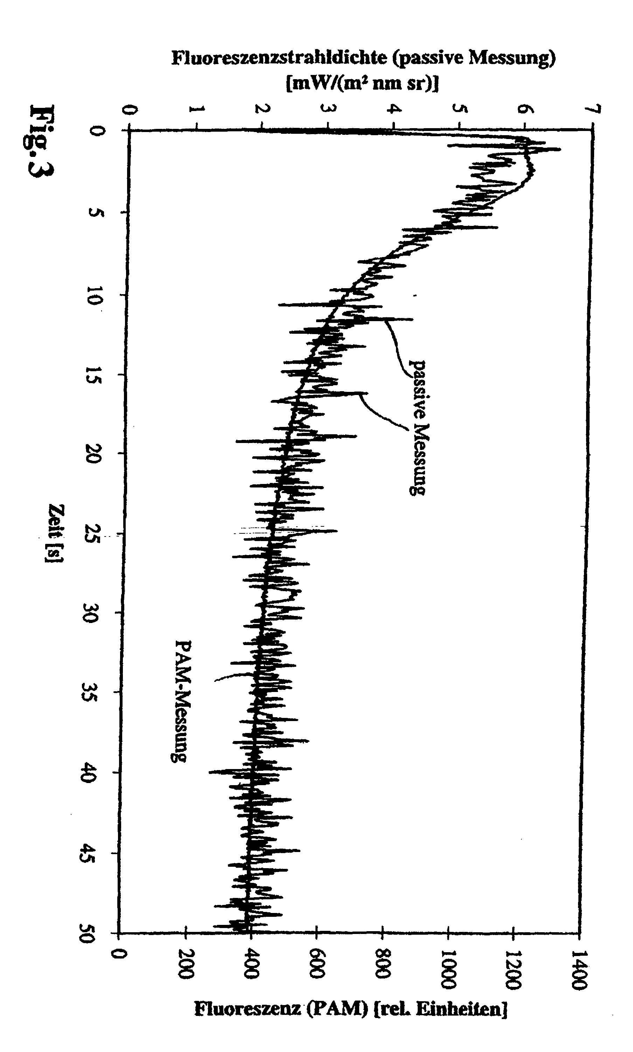

In Fig.2 ist der zeitliche Verlauf der mit Hilfe des Spektrometers gemessenen reflektierten Strahldichten von Vegetation in ($L_1$) bzw. vor ($L_2$) der $O_2$A-Absorptionsbande wiedergegeben. In Fig.3 ist der daraus nach Gl.(2) abgeleitete und mit einem PAM-Fluorometer gemessene zeitliche Verlauf der Fluoreszenz aufgetragen. Die beiden Messungen stimmen trotz der unterschiedlich großen Meßfläche sehr gut überein.

Gemäß der Erfindung ist somit ein Verfahren geschaffen, um sonnenangeregte Fluoreszenz aus Reflexionsmessungen abzuleiten. Dadurch ist es möglich, die Fluoreszenz aus passiven Messungen mit einfachen Spektrometern abzuleiten. Dies wiederum ermöglicht den Einsatz von flugzeug- bzw. satellitengetragenen Spektrometern zur großflächigen Erfassung der Chlorophyll-Fluoreszenz und damit des photosynthetischen Zustands der Vegetation.

**Patentansprüche**

1. Verfahren zur Ableitung von durch Sonnenlicht angeregtem Fluoreszenzlicht eines Meßobjekts aus einer mittels eines Sensors vorgenommenen Strahldichtemessung innerhalb einer atmosphärischen Absorptionsbande und einer weiteren mittels des Sensors vorgenommenen Strahldichtemessung, die außerhalb der atmosphärischen Absorptionsbande vorgenommen wird, **dadurch gekennzeichnet, daß** bei den Strahldichtemessungen zur Korrektur des bei der Fernerkundung gegebenen Einflusses der Atmosphäre zwischen dem Sensor und dem Meßobjekt zusätzlich Strahldichtemessungen an nicht fluoreszierenden Objekten vorgenommen werden und die Fluoreszenzstrahldichte $L^{Fluoreszenz}$ fluoreszierender Objekte anhand der Auswertegleichung

$$k_3 \cdot L^{Fluoreszenz} = L_1 - k_1 \cdot L_2 - k_2$$

$$k_1 \equiv \frac{L_1^0 \cdot T_1}{L_2^0 \cdot T_2}$$

$$k_2 \equiv L_1^{Luft} - k_1 \cdot L_2^{Luft}$$

$$k_3 \equiv T_1 - k_1 \cdot T_2$$

ermittelt wird, in der $k_3 \cdot L^{Fluoreszenz}$ die Fluoreszenzstrahldichte eines Objekts in relativen Einheiten, $L_1$ die gemessene reflektierte Strahldichte innerhalb der Absorptionsbande, $L_2$ die gemessene reflektierte Strahldichte außerhalb der Absorptionsbande, $L_1^0$ die Strahldichte des Sonnenlichts am Objekt innerhalb der Absorptionsbande, $L_2^0$ die Strahldichte des Sonnenlichts am Objekt außerhalb der Absorptionsbande, $L_1^{Luft}$ die Strahldichte des direkt von der Atmosphäre zwischen Objekt und Sensor zum Sensor gestreuten Lichts innerhalb der Absorptionsbande, $L_2^{Luft}$ die Strahldichte des direkt von der Atmosphäre zwischen Objekt und Sensor zum Sensor gestreuten Lichts außerhalb der Absorptionsbande, $T_1$ der Transmissionsgrad der Atmosphäre zwischen Objekt und Sensor innerhalb der Absorptionsbande, $T_2$ der Transmissionsgrad der Atmosphärezwischen Objekt und Sensor außerhalb der Absorptionsbande und $k_1$, $k_2$, $k_3$ konstante Größen sind und die für nicht fluoreszierende Objekte, d.h. $L^{Fluoreszenz} = 0$, eine Geradengleichung darstellt, deren Steigung der konstanten Größe $k_1$ und deren $L_1$-Achsenabschnitt der konstanten Größe $k_2$ entspricht.

2. Verfahren nach Anspruch 1, **dadurch gekennzeichnet, daß** zur Bestimmung der konstanten Größe $k_3$ und damit auch einer Absolutwertangabe der Fluoreszenzstrahldichte $L^{Fluoreszenz}$ fluoreszierender Objekte noch Bodenmessungen bzw. andere Messungen oder Simulationsrechnungen vorgenommen werden, aus denen die Transmissionsgrade $T_1$ und $T_2$ der Atmosphäre bekannt sind.

3. Verfahren nach Anspruch 1 oder 2, **dadurch gekennzeichnet, daß** das durch Sonnenlicht angeregte Fluoreszenzlicht fluoreszierender objekte aus Bilddaten abgeleitet wird, die mit Hilfe flugzeug- oder satellitengetragener abbildender Spektrometer als Sensoren gewonnen werden.

## Claims

1. A method for deriving the sunlight-induced fluorescence of a measured object from a radiance measurement undertaken by means of a sensor inside an atmospheric absorption band and from a radiance measurement undertaken by means of a sensor outside of an atmospheric absorption band **characterized in that** in radiance measurements for correcting the influence of the atmosphere between the sensor and the measured object in remote sensing additional radiance measurements are undertaken on non-fluorescent objects and the fluorescence radiance $L^{fluorescence}$ of fluorescent objects established with the aid of the analysis equation

$$k_3 \cdot L^{fluorescence} = L_1 - k_1 \cdot L_2 - k_2$$

$$k_1 \equiv \frac{L_1^0 \cdot T_1}{L_2^0 \cdot T_2}$$

$$k_2 \equiv L_1^{path} - k_1 \cdot L_2^{path}$$

$$k_3 \equiv T_1 - k_1 \cdot T_2$$

where $k_3 . L^{fluorescence}$ is the fluorescence radiance of an object in relative units, $L_1$ the measured radiance inside the absorption band, $L_2$ the measured reflectance radiance outside of absorption band, $L_1^0$ the radiance of the sunlight at the object inside the absorption band, $L_2^0$ the radiance of the sunlight at the object outside of absorption band, $L_1^{path}$ the radiance of the light reflected to the sensor directly from the atmosphere between object and sensor inside the absorption band, $L_2^{path}$ the radiance of the light reflected to the sensor directly from the atmosphere between object and sensor outside of absorption band, $T_1$ the transmittance of the atmosphere between object and sensor inside the absorption band, $T_2$ the transmittance of the atmosphere between object and sensor outside of absorption band and $k_1$, $k_2$, $k_3$ are constants and which for non-fluorescent objects, i.e. $L^{fluorescence} = 0$, represents a straight line equation, the slope of which corresponds to the constant $k_1$ and the $L_1$ offset section thereof corresponds to the constant $k_2$.

2. The method as set forth in claim 1, **characterized in that** for determining the constant $k_3$ and thus also for obtaining an absolute value of the fluorescence radiance $L^{fluorescence}$ of fluorescent objects, ground measurements or other measurements or simulations are undertaken from which the transmittances $T_1$ and $T_2$ of the atmosphere are known.

3. The method as set forth in claim 1 or 2, **characterized in that** the sunlight-induced fluorescence of fluorescence objects is derived from image data obtained with the aid of aerospace imaging spectrometers as sensors.


**Revendications**

1. Procédé pour dériver une lumière de fluorescence, induite par la lumière solaire, d'un objet de mesure à partir d'une mesure de densité de rayonnement exécutée à l'aide d'un capteur, à l'intérieur d'une bande d'absorption atmosphérique et d'une autre mesure de densité de rayonnement réalisée à l'aide du capteur et qui est effectuée à l'extérieur de la bande d'absorption atmosphérique, **caractérisé en ce que** dans le cas des mesures de densité de rayonnement pour la correction de l'influence, produite par l'exploration à distance, de l'atmosphère entre le capteur et l'objet de mesure, on exécute en supplément des mesures de densité de rayonnement sur des objets non fluorescents, et on détermine la densité de rayonnement de fluorescente $L^{fluorescence}$ d'objets fluorescents sur la base de la relation d'évaluation

$$k_3 \cdot L^{fluorescence} = L_1 - k_1 \cdot L_2 - k_2$$

$$k_1 \equiv \frac{L_1^0 \cdot T_1}{L_2^0 \cdot T_2}$$

$$k_2 \equiv I_1^{air} - k_1 \cdot L_2^{air}$$

$$k_3 \equiv T_1 - k_1 \cdot T_2$$

dans laquelle $k_3 \cdot L^{fluorescence}$ désigne la densité de rayonnement de fluorescence d'un objet en des unités relatives, $L_1$ désigne la densité de rayonnement réfléchi mesuré à l'intérieur de la bande d'absorption, $L_2$ désigne la densité mesurée de rayonnement réfléchi à l'extérieur de la bande d'absorption, $L_1^0$ désigne la densité de rayonnement de la lumière solaire au niveau de l'objet à l'intérieur de la bande d'absorption, $L_2^0$ désigne la densité de rayonnement de la lumière solaire au niveau de l'objet à l'intérieur de la bande d'absorption, $L_1^{air}$ désigne la densité de rayonnement de la lumière dispersée en direction du capteur par l'atmosphère présente entre l'objet et le capteur, à l'intérieur de la bande d'absorption, $L_2^{air}$ désigne la densité de rayonnement de la lumière dispersée directement en direction du capteur par l'atmosphère située entre l'objet et le capteur, à l'extérieur de la bande d'absorption, $T_1$ désigne le degré de transmission de l'atmosphère située entre l'objet et le capteur à l'intérieur de la bande d'absorption, $T_2$ désigne le degré de transmission de l'atmosphère située entre l'objet et le capteur à l'extérieur de la bande d'absorption et $k_1$, $k_2$, $k_3$ désignent des grandeurs constantes, et qui représente pour des objets non fluorescents, c'est-à-dire $L^{fluorescence} = 0$, l'équation d'une droite, dont la pente est égale à la grandeur constante $k_1$ et dont la section d'intersection sur l'axe $L_1$ correspond à la grandeur constante $k_2$.

2. Procédé selon la revendication 1, **caractérisé en ce que** pour la détermination de la grandeur constante $k_3$ et par conséquent également d'une indication de valeur absolue de la densité du rayonnement de fluorescence $L^{fluorescence}$ d'objets fluorescents on réalise également des mesures au sol et d'autres mesures ou des calculs de simulation, à partir desquels on connaît les degrés de transmission $T_1$ et $T_2$ de l'atmosphère.

3. Procédé selon la revendication 1 ou 2, **caractérisé en ce que** la lumière de fluorescence, induite par la lumière solaire, d'objets fluorescents est dérivée de données d'image, qui sont obtenues à l'aide de spectromètres de formation d'images, utilisés comme capteurs et placés dans un avion ou dans un satellite, en tant que capteurs.

Fig. 2

EP 0 952 441 B1

Fig.3

8

Fig. 4

Fig.5

**Fig.1**